# EUROPÄISCHE PATENTANMELDUNG

(11) **EP 1 413 966 A1**
(43) Veröffentlichungstag der Anmeldung: **28.04.2004**
(21) Anmeldenummer: 02023545.3
(22) Anmeldetag: 22.10.2002
(51) Int. Cl.: G06F 17/60

(54) **EDV-System und Verfahren zur Abwicklung von Handelsgeschäften über Datenleitungen**

(71) Anmelder: Pichler, Johannes, Prof. Dr., 8010 Graz (AT)
(72) Erfinder: Pichler, Johannes, Prof. Dr., 8010 Graz (AT)
(74) Vertreter: Schmitz, Hans-Werner, Dipl.-Ing.

(57) **Zusammenfassung**

Zur einfachen und sicheren Abwicklung von E-Commerce-Geschäften lehrt die Erfindung ein EDV-System (1) zur Abwicklung von Handelsgeschäften über Datenleitungen, insbesondere Internet-Handelsgeschäfte, mit zumindestens einem Verkäufer-Datenterminal (2), mit zumindestens einem Käufer-Datenterminal (3), und mit einer ersten Datenleitung (D1, D_{D}, D2), über die das Verkäufer-Datenterminal (2) und das Käufer-Datenterminal (3) für einen ersten Datenaustausch zur Initiierung des Handelsgeschäftes direkt, insbesondere über das Internet (I), verbindbar sind, wobei eine Treuhand-Datenverarbeitungsanlage (1A) vorgesehen ist, die wahlweise mit Hilfe eines auf dem Verkäufer-Datenterminal (2) vorgesehenen Zusatztools über eine zweite Datenleitung (D1, D_{T1}, D3) mit dem Käufer-Datenterminal (3) und eine dritte Datenleitung (D2, D_{T2}, D3) mit dem Verkäufer-Datenterminal (2) für den weiteren Datenaustausch zur Vollendung des Handelsgeschäftes zwischen Verkäufer-Datenterminal (2) und Käufer-Datenterminal (3) zwischenschaltbar ist.

## Beschreibung

Die Erfindung betrifft ein EDV-System zur Abwicklung von Handelsgeschäften über Datenleitungen, insbesondere Internet-Handelsgeschäfte, gemäß dem Oberbegriff des Anspruches 1, sowie ein Verfahren zur Abwicklung derartiger Handelsgeschäfte gemäß Anspruch 12.

In der EP 1 093 071 A1 wird einleitend ausgeführt, dass aufgrund des starken Ansteigens von Geschäften, insbesondere an Kaufgeschäften, die als E-Commerce-Geschäfte über World-Wide-Web-Dienste abgeschlossen werden, ein hoher Bedarf besteht, die mit diesen Geschäften verbundenen Risiken auf schnelle und einfache Art und Weise abzusichern.

Die genannte Druckschrift schlägt zur Lösung dieses Problems ein Verfahren vor, bei dem zur Absicherung dieser Risiken eine automatisierte Vergabe einer Versicherung erfolgt.

Aus der WO 01/92989 A2 ist ein System und ein Verfahren für E-Commerce-Geschäfte bekannt, mit dem es zur Lösung einer ähnlichen Problematik möglich sein soll, unter Anderem temporäre Credit-Card-Nummern einem Scheckkonto eines registrierten Benutzers zuzuordnen, mit welcher dann das jeweilige Handelsgeschäft abgewickelt werden kann.

Da der Abschluss einer speziellen Versicherung für ein E-Commerce-Geschäft zwar eine gewisse Risikominimierung darstellen mag, jedoch das an und für sich beabsichtigte unkomplizierte Abwickeln des Geschäftes über das Internet wieder verkompliziert, und da sich eine derartige Verkomplizierung auch durch die zuvor erläuterte Vergabe temporärer Credit-Card-Nummern und -Konten ergibt, können die beiden genannten Systeme bzw. Verfahren nur Teilaspekte des eigentlichen Bedürfnisses befriedigen, das letztendlich auf die weitgehende Aufrechterhaltung des unkomplizierten E-Commerce-Handelsgebarens einerseits und des Sicherheitsbedürfnisses sowohl des Käufers als auch des Verkäufers hinausläuft.

Es ist daher Aufgabe der vorliegenden Erfindung, ein elektronisches Datenverarbeitungs-System und ein Verfahren zur Abwicklung von Handelsgeschäften, insbesondere im Internet, zu schaffen, das die zuvor genannten Probleme zumindestens weitgehend ausräumt und dabei vor allem die unkomplizierte Geschäftsanbahnung über die direkte Kontaktierungsmöglichkeit zwischen Verkäufer und Käufer über elektronische Datenleitungen unberührt lässt.

Die Lösung dieser Aufgabe erfolgt durch die Merkmale des Anspruches 1 bzw. des Anspruches 12.

Das erfindungsgemäße EDV-System ergibt zunächst den Vorteil, dass ein potentieller Käufer wie üblich über das Internet einen potentiellen Verkäufer kontaktieren kann und ohne die Notwendigkeit irgendwelcher zusätzlicher Maßnahmen einen vom Käufer gewünschten Warenkorb zusammenstellen kann. Es ergibt sich mithin für den Käufer zunächst keinerlei Unterschied zu seinem unter Umständen schon seit langem durchgeführten Kaufgebaren. Da das erfindungsgemäße EDV-System jedoch ein Zusatz-Tool vorsieht, das beispielsweise ein auf der Website des Verkäufers vorgesehener Treuhand-Button sein kann, kann der Käufer durch einfache Betätigung dieses Buttons eine Treuhand-Datenverarbeitungsanlage über entsprechende Datenleitungen zwischen das Käufer-Datenterminal und das Verkäuferterminal zwischenschalten. Der Käufer hat mithin aufgrund des erfindungsgemäßen EDV-Systems durch einen einzigen Zusatzklick die Möglichkeit, seinem Sicherheitsbedürfnis durch die genannte Zwischenschaltung der Treuhand-Datenverarbeitungsanlage gerecht zu werden, die dann ohne weiteres zeitaufwendiges oder kompliziertes Zutun des Käufers nach zuvor festgelegten Abläufen das vom Käufer initiierte Handelsgeschäft vollendet, wobei zur Erreichung einer schnellen, unkomplizierten, preisgünstigen exakten und datengesicherten Abwicklung sämtliche technische Möglichkeiten der modernen eletronischen Datenverarbeitungstechnik ausgenützt werden. Nach der Wahl der Treuhandfunktion hat der Käufer lediglich wenige und einfachste Bestätigungen einzugeben, wie beispielsweise die Kaufbestätigung nach automatischer Übermittlung des Gesamtkaufpreises, so dass das erfindungsgemäße EDV-System nur unerhebliche Abweichungen und Zusatzfunktionen durch das Vorsehen der Treuhand-Datenverarbeitungsanlage gegenüber ungesicherten E-Commerce-Geschäften erfordert. Gleichzeitig kann auch das Sicherheitsbedürfnis der Verkäufer befriedigt werden, da auch er von den festgelegten Treuhandmodulen profitiert.

Die Unteransprüche 2 bis 10 haben vorteilhafte Weiterbildungen des erfindungsgemäßen EDV-Systems zum Inhalt.

In Anspruch 11 ist eine Treuhand-Datenverarbeitungsanlage für ein EDV-System gemäß einem der Merkmale der Ansprüche 1 bis 10 als separates Handelsobjekt definiert.

In Anspruch 12 ist ein erfindungsgemäßes Verfahren angegeben.

Weitere Einzelheiten, Merkmale und Vorteile der Erfindung ergeben sich aus nachfolgender Beschreibung von Ausführungsbeispielen anhand der Zeichnung. Es zeigt:
- Fig. 1: ein schematisch vereinfachtes Blockdiagramm einer möglichen Ausführungsform eines erfindungsgemäßen EDV-Systems,
- Fig. 2: ein Blockschaltbild zur Verdeutlichung des Bestellvorganges des erfindungsgemäßen Verfahrens,
- Fig. 3: eine Darstellung einer Login-Maske des erfindungsgemäßen EDV-Systems,
- Fig. 4: eine Darstellung einer Toolbar des erfindungsgemäßen EDV-Systems,
- Fig. 5: ein Blockschaltbild des Verfahrensablaufes für die Neukundenerfassung des erfindungsgemäßen Verfahrens,
- Fig. 6: ein Blockschaltbild des Verfahrensablaufes zur Registrierung einer Änderung der Lieferadresse gemäß dem erfindungsgemäßen Verfahren,
- Fig. 7: ein Blockschaltbild des Verfahrensablaufes zur Berechnung des Gesamtabgabepreises des erfindungsgemäßen Verfahrens,
- Fig. 8: eine Darstellung einer Maske für Neukunden bzw. Stammdatenänderungen,
- Fig. 9: ein Blockschaltbild des Verfahrensablaufes zur Erfassung einer Transaktionshistorie gemäß dem erfindungsgemäßen Verfahren,
- Fig. 10: eine Darstellung einer Maske für die Transaktionshistorie im Web gemäß Fig. 9,
- Fig. 11: eine Darstellung einer Maske für eine Direktverhandlung innerhalb des erfindungsgemäßen EDV-Systems bzw. gemäß dem erfindungsgemäßen Verfahren,
- Fig. 12: ein Blockschaltbild eines Verfahrensablaufes zur Problem-Behandlung gemäß dem erfindungsgemäßen Verfahren, und
- Fig. 13: eine Maske der Problembehandlung gemäß dem Verfahrensablauf der Fig. 12.

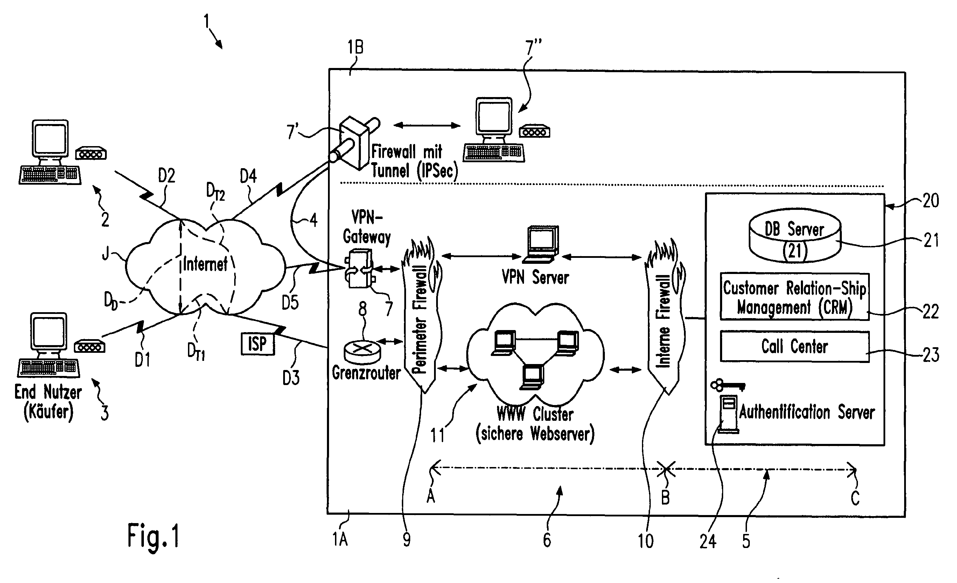

In Fig. 1 ist in schematisch vereinfachter Darstellung eine mögliche Ausführungsform eines erfindungsgemäßen EDV-Systems 1 zur Abwicklung von Handelsgeschäften über Datenleitungen dargestellt. Derartige Handelsgeschäfte, die üblicher Weise über das World-Wide-Web bzw. das Internet abgewickelt werden, werden im Allgemeinen als E-Commerce-Geschäfte bezeichnet.

Bei der in Fig. 1 dargestellten einfachsten Ausführungsvariante weist das EDV-System 1 zunächst ein Käufer-Datenterminal 3 auf, das von einem handelsüblichen Computer, insbesondere in Form eines Personal-Computers oder einem Laptop, gebildet werden kann.

Ferner ist ein Verkäufer-Datenterminal 2 dargestellt, das ebenso ein handelsüblicher Computer, Server, Personal-Computer oder Laptop sein kann.

Das Verkäufer-Datenterminal 2 und das Käufer-Datenterminal 3 können auf übliche Art und Weise, wie beispielsweise über einen Internet-Provider, mit dem Internet I in Verbindung stehen.

Hierbei kann eine direkte Datenverbindung zwischen dem Käufer-Datenterminal 3 und dem Verkäufer-Datenterminal 2 durch die beispielhaft dargestellte Verbindung über die Datenleitungen D1, D_{D} und D2 hergestellt werden. Mit Hilfe einer derartigen üblichen Datenverbindung kann vom Käufer bzw. Nutzer des Käufer-Datenterminals 3 ein Handelsgeschäft initiiert werden, bei dem beispielsweise vom Käufer über seinen Personal-Computer ein Warenkorb gefüllt wird.

Erfindungsgemäß weist das in Fig. 1 dargestellte EDV-System 1 ferner eine Treuhand-Datenverarbeitungsanlage 1A auf, die mit Hilfe eines auf dem Verkäufer-Datenterminal 2 vorgesehenen Zusatz-Tools, das vom Käufer betätigt werden kann, zur Vollendung des E-Commerce-Handelsgeschäftes zwischen das Käufer-Datenterminal 3 und das Verkäufer-Datenterminal 2 zwischengeschaltet werden kann. Diese Zwischenschaltung ist in Fig. 1 durch eine zweite Datenleitung D1, D_{T1}, D3 zwischen Käufer-Datenterminal 3 und Treuhand-Datenverarbeitungsanlage 1A und eine dritte Datenleitung D2, D_{T2}, D3 zwischen Verkäufer-Datenterminal 2 und Treuhand-Datenverarbeitungsanlage 1 symbolisiert.

Somit ist es mit dem erfindungsgemäßen EDV-System 1 zunächst möglich, dass der Verkäufer über sein Datenterminal 2 eine Website im Internet mit Shopsystem auf übliche Art und Weise betreibt. Der Käufer benutzt das System über einen Internet-Browser auf seinem Datenterminal 3 mit Internetzugang. Diese Ausbildung des erfindungsgemäßen EDV-Systems 1 ermöglichst somit sowohl dem Käufer als auch dem Verkäufer zunächst eine völlig normale Benutzung der Möglichkeiten des E-Commerce. Der Verkäufer hat zur Verwirklichung der erfindungsgemäßen Prinzipien zum Beispiel lediglich einen entsprechenden Treuhand-Button auf seiner Website zu integrieren, der dann vom Käufer zur Zwischenschaltung der Treuhand-Datenverarbeitungsanlage 1A betätigt werden muss.

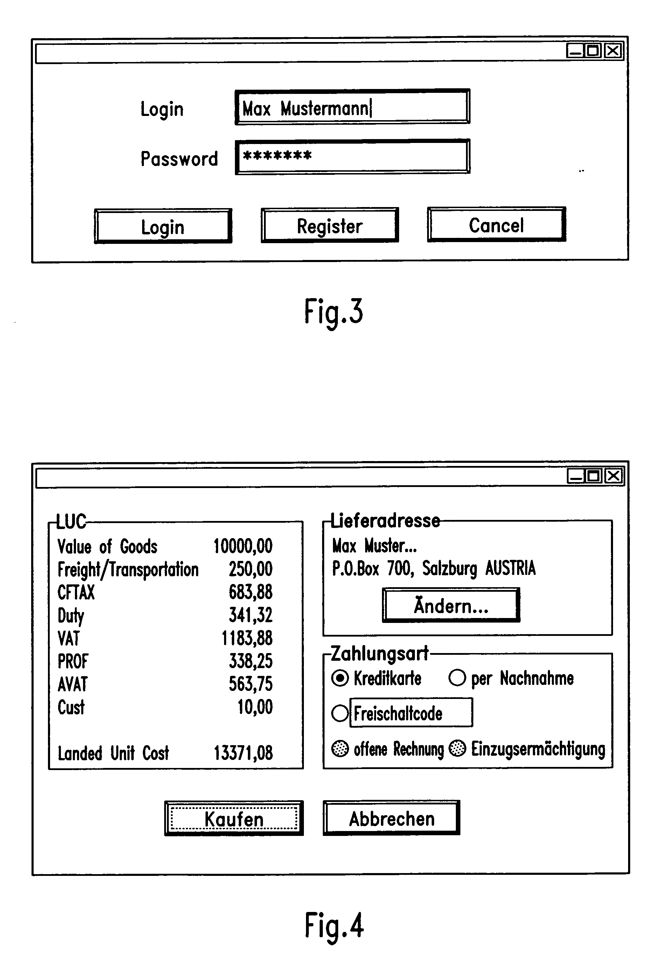

Zur Abwicklung des vom Käufer initiierten Handelsgeschäftes weist die Datenverarbeitungsanlage 1A zunächst ein Gateway 7 auf, das die Datenverarbeitungsanlage 1A mit einem Datenverarbeitungssystem 1B eines Logistikunternehmens koppeln kann. Diese Verbindung erfolgt hierbei vorzugsweise über ein IPsec und hardwarebasiertes VPN-Gateway (wobei "VPN" -- Virtual Private Network -- bedeutet). Hierdurch kann eine vertrauliche Kommunikation über ein öffentliches Netzwerk geführt werden, das durch die Datenleitung 4 in Fig. 4 symbolisiert ist. Die Verschlüsselung der Daten basiert auf einer so genannten Privat-Key-Infrastruktur PKI. Zur Vermeidung der Notwendigkeit dynamischer Zertifikate werden die jeweiligen Zertifikate der Parteien (also des Logistikunternehmens und des Treuhandunternehmens) inklusive aller Zertifikatketten bis hin zur Zertifizierungsstelle an der Wurzel der Zertifizierungshierarchie sicherheitshalber manuell ausgetauscht.

Das Datenverarbeitungssytem 1B des Logistikunternehmens weist vorzugsweise eine Firewall bzw. ein Firewallmodul 7' auf, das über ein Datenleitung D4 mit dem Internet I sowie mit der Datenverbindung 4 verbunden ist und ein System von Datenterminals des Logistikunternehmens schützt, die in Fig. 1 durch das Datenterminal 7 " symbolisiert ist.

Die Datenverarbeitungsanlage 1A weist ferner ein internes Netzwerk 5 auf, das durch die gestrichelte Linie zwischen den Buchstaben B und C symbolisiert ist. Ferner weist die Datenverarbeitungsanlage 1A eine Zugriffs-Beschränkungsvorrichtung 6 auf, die durch die gestrichelte Linie zwischen den Buchstaben A und B symbolisiert ist. Die Zugriffs-Beschränkungsvorrichtung 6 wird auf einer Seite über eine (Perimeter) Firewall bzw. ein Firewallmodul 9 sowie das VPN-Gateway 7 und einen Router 8 mit einem Internetserviceprovider ISP verbunden. Andererseits wird die Zugriffs-Beschränkungsvorrichtung 6 zum internen EDV-Netzwerk 5 mit einer internen Firewall 10 bzw. einem internen Firewallmodul geschützt. Innerhalb der Zugriffs-Beschränkungsvorrichtung 6 ist eine Mehrzahl (Cluster) von sicheren Webservern 11 vorgesehen, welche mit einem Belastungsausgleich (Load Balancing) ausgestattet sind. Dies gewährleistet kurze Antwortzeiten auch bei sehr vielen gleichzeitigen Anfragen an das System und verringert somit gleichzeitig die Chance der Serviceverweigerung (Denial of Service-Attacken (DoS)). Die Webserver 11 stellen die Kernwebdienste bereit und kommunizieren mit Internetkunden über die Standard-Internettransportprotokolle HTTP und HTTPS. Die Webserver 11 können aber auch mit internen Einrichtungen, insbesondere einem internen Netzwerkserver 20 und dessen Datenbankserver 21 kommunizieren, die Bestandteile des internen Netzwerks 5 sind.

Das interne Netzwerk 20 weist bei der dargestellten besonders bevorzugten Ausführungsform ferner einen CRM-Modul 22 für das Management von Kundenbeziehungen, ein Call-Center 23 und einen Authentizitäts-Server 24 auf. Die interne Firewall 10 bietet Schutz für den bzw. die internen Netzwerkserver 20. Diese können aus separaten funktionalen Bereichen, die in Netzwerksegmente oder VLANs unterteilt sind bestehen. Das Implementieren von Netzwerksegmenten lässt die maximale Isolation unterschiedlicher Segmente zu und erhöht die Sicherheit und Verwaltung des Datenflusses zwischen den Anwendungskomponenten. Vorzugsweise werden für die interne Firewall 10 Verkehrsregeln konfiguriert, so dass lediglich bestimmte Server und TCP/IP-Ports aus der Zugriffs-Beschränkungsvorrichtung 6 mit den VLANs kommunizieren können.

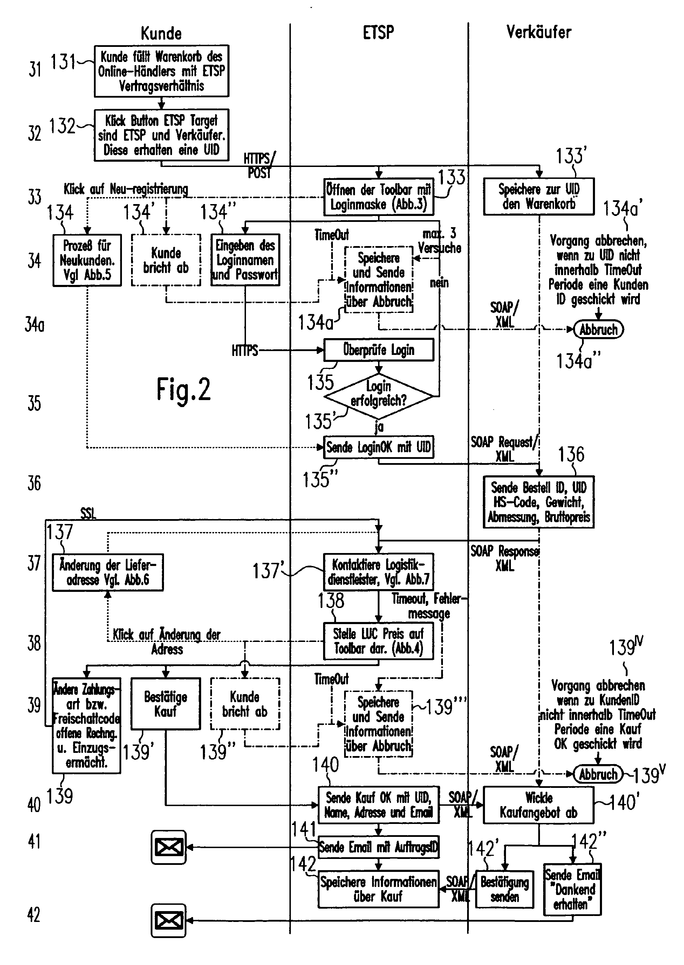

In Fig. 2 ist ein Ablaufdiagramm dargestellt, das den Bestellund Bezahl-Vorgang gemäß dem erfindungsgemäßen Verfahren verdeutlicht. In Fig. 2 sind Prozessstufen 31 bis 42 und entsprechende Prozessschritte dargestellt, die gemäß nachfolgender Beschreibung durchlaufen werden und die entsprechend der Darstellung der Fig. 2, auf die explizit zu Offenbarungszwecken Bezug genommen wird, voneinander abhängen.

In der ersten Stufe 31 wählt in Verfahrensschritt 131 der Kunde auf der Website eines Verkäufers seine Waren und legt diese in den Warenkorb. Danach möchte er bezahlen. Dieser Schritt erfolgt noch unabhängig von dem erfindungsgemäßen EDV-System, das in Fig. 2 in der mittleren Spalte des Ablaufdiagrammes mit dem Buchstaben "ETSP" gekennzeichnet ist.

In der nächsten Stufe 32 wählt der Kunde in Schritt 132 als Zahlungsform das ETSP-System. Hierzu hat der Verkäufer bzw. Shopbetreiber einen entsprechenden Button auf seiner Website zu integrieren. Durch Anklicken des Buttons "ETSP" wird eine eindeutige Identifikationsnummer UID im Browser generiert. Die UID kann aus einem Zeitstempel und einer Zufallszahl gebildet werden, so dass diese innerhalb der Zeitspanne des Kaufvorganges als einmalig betrachtet werden kann. Sie wird gemeinsam mit den Daten aus dem Warenkorb via HTTPS/Post an ETSP und den Verkäufer gesandt. Beim Verkäufer werden diese Daten zur späteren Verarbeitung auf der Ebene 33 in Schritt 133' abgelegt. Das System von ETSP öffnet beim Käufer gemäß Schritt 133 eine Toolbar mit Loginmaske, die beispielhaft in Fig. 3 dargestellt ist, auf die hiermit ausdrücklich verwiesen wird. Ferner wird vom ETSP-System die UID gespeichert. Hat der Kunde die Toolbar lokal installiert, wird diese nun aufgerufen. Andernfalls wird die Toolbar als Webpage am ETSP-Server geöffnet. Der Kunde hat nun die Wahl, sich als Neukunde bei ETSP zu registrieren "Register", den Kauf abzubrechen "Cancel" oder sich mit Login und Password am System anzumelden "Login", was sich in Ebene 34 aus den Schritten 134, 134' und 134'' ergibt.

Bricht der Kunde den Vorgang ab, oder erhält der Server von ETSP nach einer gewissen Zeit keine Antwort vom Käufer "Time-out", wird beim ETSP die Verkäuferidentifikation "Shop ID" und die Identität IP des Kunden gespeichert, um zu einem späteren Zeitpunkt Statistiken über abgebrochene Transaktionen führen zu können. Das Webservice des Verkäufers erhält eine SOAP-Nachricht, dass der Verkaufsvorgang mit entsprechender UID abgebrochen wurde (Ebene 34A, Schritt 134A). Wählt der Kunde "Login", werden die Daten aus den Feldern "Login" und "Password" der Loginmaske gemäß Figur 3 mittels HTTPS verschlüsselt SSL an ETSP versandt.

Dort werden die Daten mit den gespeicherten Kundendaten im Datenbankserver 21 verglichen (Ebene 35, Schritt 135). Stimmen diese nicht überein, werden die Felder der Toolbar gelöscht, und der Kunde hat erneut eine Chance, sich am System anzumelden. Sollte ein Loginversuch dreimal hintereinander fehlschlagen, wird der Vorgang als abgebrochen bewertet. Wenn die Eingaben korrekt sind, wird eine SOAP-Nachricht "Login OK" mit UID an das Webservice des Verkäufers gesandt (Schritt 135'').

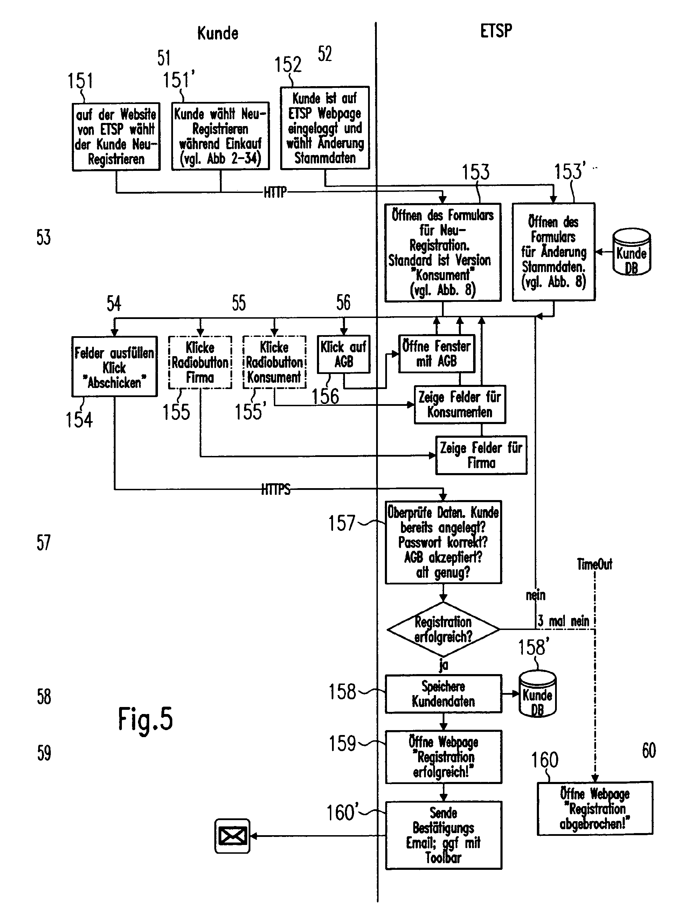

Wählt der Kunde den Knopf "Registrieren", so tritt der Prozess für Neukunden in Kraft, der in Fig. 5 im Einzelnen dargestellt ist und auf den hiermit ausdrücklich Bezug genommen wird.

Nachdem der Verkäufer via SOAP-Nachricht die Meldung "Login OK" mit der UID erhalten hat, muss dieser in der Datenbank den Warenkorb zu der entsprechenden UID aufrufen. Anschließend ermittelt er Gewicht, Abmessungen, Bruttopreis und HS-Codes "Harmonized System Code" der Waren, und schickt diese Daten mit der UID als SOAP-Antwort an das System von ETSP (Ebene 36 Schritt 136).

Gemäß Ebene 37 schickt das System von ETSP diese Daten gemeinsam mit gewünschter Lieferadresse und Zahlungsart über die VPN-Datenleitung 4 gemäß Fig. 1 an den via Webservice angeschlossenen Logistikdienstleister mit seinem Datenverarbeitungssystem 1B (siehe Fig. 1). Dieser ermittelt daraus die zu entrichtende Steuer, den Zoll, die Transportkosten und schließlich den endgültigen Gesamtpreis "LUC - Landed Unit Cost" für den Kunden. Das Ergebnis wird zurückgeliefert und in der ETSP-Toolbar beim Kunden dargestellt (Schritte 137', 138). Dieser hat nun die Möglichkeit, den Kauf abzubrechen, seine Lieferadresse oder Zahlungsart zu ändern (Schritt 137) sowie den Kauf zu tätigen.

Vorzugsweise ist die Zahlungsart "Kreditkarte" gewählt. Klickt der Kunde auf die Zahlungsart "per Nachnahme", so werden die Lieferkosten über den Logistikdienstleister neu berechnet und auf der Toolbar dargestellt. Der Kunde kann aber auch einen Freischaltcode eingeben, den er zuvor auf dem Postweg erhalten hat. Dieser ermöglicht zusätzlich die Wahl der Zahlungsart "auf offene Rechnung". Dadurch, dass der Kunde den Freischaltcode per Post erhält, ist sichergestellt, dass er korrekte Adressangaben gemacht hat. Der Code kann nur einmal eingegeben werden. Meldet der Kunde sich das nächste Mal bei ETSP an, ist diese Zahlungsform bereits für ihn wählbar. Die Option "Einzugsermächtigung" wird von ETSP aktiviert, sobald ETSP das unterschriebene Einzugsermächtigungs-Formular des Kunden erhalten hat (siehe Ebenen 38, 39 und Schritte 138, 139, 139', 139" und 139''').

Auch für den Fall, dass der Kunde eine der beiden letztgenannten Zahlungsformen wählt, wird mittels des Logistikdienstleisters der LUC neu berechnet.

Wenn der Kunde auf den Knopf "Abbrechen" drückt, oder der Webserver von ETSP eine gewisse Zeit lang keine Antwort erhält "TimeOut", so wird beim ETSP die Shop-ID und die Kunden-ID gespeichert, um zu einem späteren Zeitpunkt Statistiken über abgebrochene Transaktionen führen zu können (Schritt 139'''). Das Webservice des Verkäufers erhält eine SOAP-Nachricht, dass der Verkaufsvorgang mit entsprechender UID abgebrochen wurde. Dasselbe passiert, wenn das Webservice des Logistikers eine Fehlermeldung liefert, oder sich dieses nicht meldet (siehe Schritte 139 IV und 139 V).

Bestätigt der Kunde das Kaufvorhaben mit Klick auf dem Button "Kauf", wird diese Aktivität via HTTPS (SSL) an ETSP gemeldet. Dort wird eine "Kauf OK"-Meldung generiert, welche folgende Daten enthält: Die UID der Transaktion, den Namen des Kunden sowie dessen E-Mail- und Lieferadresse. Die Meldung wird über SOAP an den Verkäufer gesandt, und die Daten in der Kundendatenbank gespeichert. Des Weiteren wird eine E-Mail an den Kunden versandt (Schritt 151), in der darauf hingewiesen wird, sich bei Problemen an ETSP zu wenden. Der Verkäufer kann nun das Kaufangebot abwickeln und schickt eine Bestätigung via SO-AP an ETSP sowie via E-Mail an den Käufer (Schritte 140', 142, 142' und 142'').

In den Fig. 3 und 4 sind die bereits erwähnte Login-Maske bzw. die ETSP-Toolbar beispielhaft dargestellt, so dass zum Zwecke der Offenbarung hiermit explizit auf diese Figuren verwiesen werden kann.

Fig. 5 zeigt ein Ablaufprogramm für die Prozesse der Neukunden-Registration und der Änderung der Stammdaten (Schritte 151, 151' bzw. 152).

Die Registration wird entweder auf der Website von ETSP initiiert (z.B. durch Klick auf einen Button "Anmelden"), oder der Kunde kauft bei einem Shop, entscheidet sich für das ETSP-System und wählt - weil er noch kein ETSP-Kunde ist - auf der Toolbar den Knopf "Registration", der in Fig. 3 als "Register" erkennbar ist.

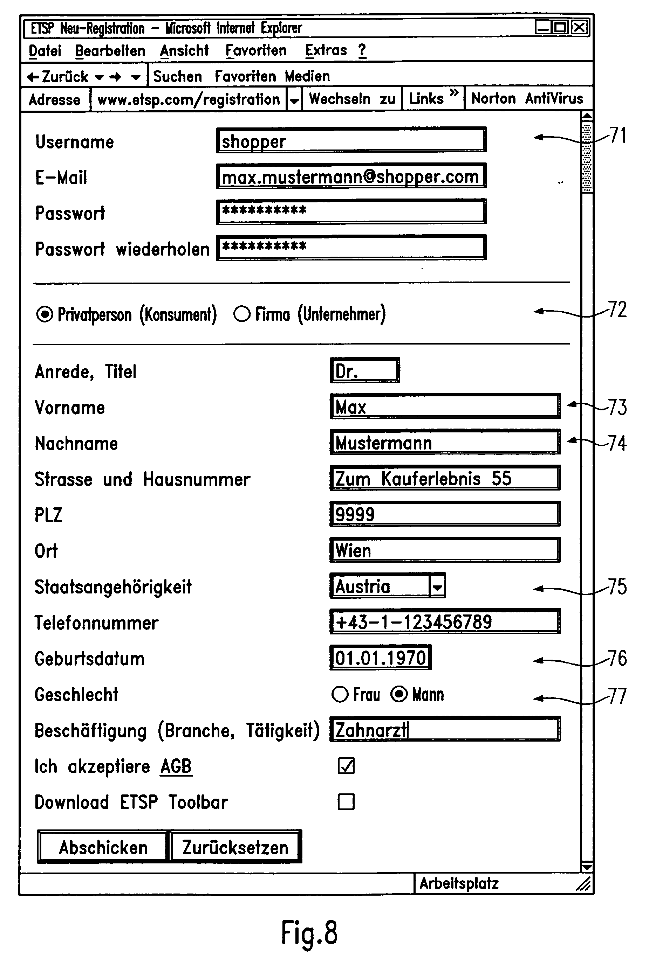

Beim Kunden öffnet sich eine Maske (Stufe 53, Schritte 153, 153'). Dieselbe Maske, die in Fig. 8 beispielhaft dargestellt ist, wird geöffnet, wenn der Kunde bereits angelegt ist und seine Stammdaten gemäß Schritt 152 ändern will. In diesem Fall werden aus der Kunden-Datenbank die aktuellen Daten gelesen und im Formular dargestellt. Gewisse Felder lassen sich in diesem Falle nicht ändern.

Die Maske besitzt unterschiedliche Felder - je nachdem, ob man sich als Konsument oder Verkäufer einträgt. Diese Felder sind nachfolgend tabellarisch zusammengestellt, wobei sich die in Klammern gesetzten Ziffern auf die Bezugsziffern in Fig. 8 beziehen.

| **Konsument/Privatperson** | **Verkäufer/Firma/Unternehmer** |
|---|---|
| Username (*) | Username (*)(71) |
| Passwort + Wiederholung | Passwort + Wiederholung |
| Anrede, Titel | Vollständige Firmenname (*) |
| Vorname (*)(73) | Firmensitz, vollständige Adresse(*) |
| Nachname (*)(74) | Adr Versendungs-Niederlassung |
| Strasse und Hausnummer | Telefonnummer |
| Postleitzahl | Fax |
| Ort | Email |
| Staatsangehörigkeit (*)(75) | Rechtsform (*) |
| Telefonnummer | Firmenbuchnummer (*) |
| Geburtsdatum (*)(76) | UID (*) |
| Geschlecht (m/w)(*)(77) | bei KGs: Name und Anschrift der vertretungsbefugten Organe (*) |
| Beschäftigung (Branche, Tätigkeit) | Jahresumsatz |
| Akzeptierte AGB | Branche |
| Download ETSP Toolbar | |
| Felder mit (*) können im Änderungsmodus nicht geändert werden! | |

Standardgemäß wird das Formular mit den Feldern für Konsumenten angezeigt. Klickt der Kunde auf den Radiobutton "Firma" (Schritt 155, Button 72 in Fig. 8), so werden die Felder für Firmenkunden angezeigt. Beide Formulare enthalten unter Anderem eine Checkbox zur Anerkennung der Allgemeinen Geschäftsbedingungen (AGB). Diese können über einen Link in einem eigenen Fenster angezeigt werden (Schritt 156). Wenn der Kunde alle Felder ausgefüllt hat, und diese den kundenseitig durchgeführten Validierungsregeln genügen (E-Mail Adresse muss Format x@y.z folgen; Password und die Wiederholung müssen übereinstimmen; Namen dürfen nur Buchstaben enthalten; gültiges Geburtsdatum; AGB akzeptiert usw.), werden sie mittels SSL verschlüsselt an ETSP gesandt (Stufe 54, Schritt 154). Dort folgt eine server-seitige Validierung in Stufe 57 und Schritt 157. Geprüft wird beispielsweise, ob es bereits einen Kunden mit dem gewählten Usernamen gibt, ob das Passwort den Sicherheitsregeln entspricht bis hin zu Checks von Postleitzahlen und Ähnlichem. Ist die Validierung negativ, hat der Kunde die Möglichkeit, seine Angaben zu ändern. Nach dem dritten Versuch jedoch wird die Registrierung abgebrochen (Stufe 60, Schritt 160).

Ist die Registrierung erfolgreich, werden die Kundendaten gespeichert und in die Kundendatenbank geschrieben (Stufe 58, Schritte 158, 158', 159).

Der Kunde erhält eine E-Mail zur Bestätigung seiner Anmeldung. Hat er auf dem Formular die Checkbox "Download ESTP Toolbar" angehakt, wird mit der E-Mail auch die Toolbar als Anlage versandt.

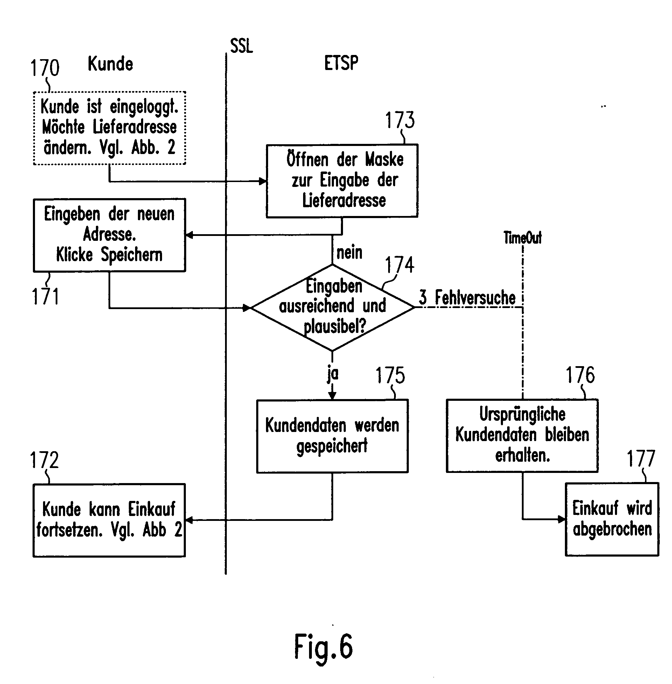

In Fig. 6 ist ein Ablaufdiagramm gezeigt, das den Prozess zur Änderung der Lieferadresse in den Schritten 170 bis 177 verdeutlicht. Dabei ist der Kunde bereits eingeloggt. Es öffnet sich ein Formular zur Eingabe der neuen Lieferadresse. Dieses kann der Kunde ausfüllen und mittels SSL an ETSP übertragen. Dort wird kontrolliert, ob die Angaben plausibel und vollständig sind. Sind sie dies nicht, hat der Kunde die Chance, die Eingaben zu korrigieren. Sollten sie jedoch dreimal falsch sein, wird die Adresse nicht geändert und der Kaufvorgang wird abgebrochen. Sind die Eingaben in Ordnung, werden die Kundendaten in der Datenbank des Datenbankservers 21 gemäß der Darstellung der Fig. 1 aktualisiert, wobei die alte Adresse archiviert wird, so dass diese bei eventuell auftauchenden Problemen wieder herangezogen werden kann. Mit der neuen Adresse kann nun ein neuer LUC berechnet und in der Toolbar dargestellt werden.

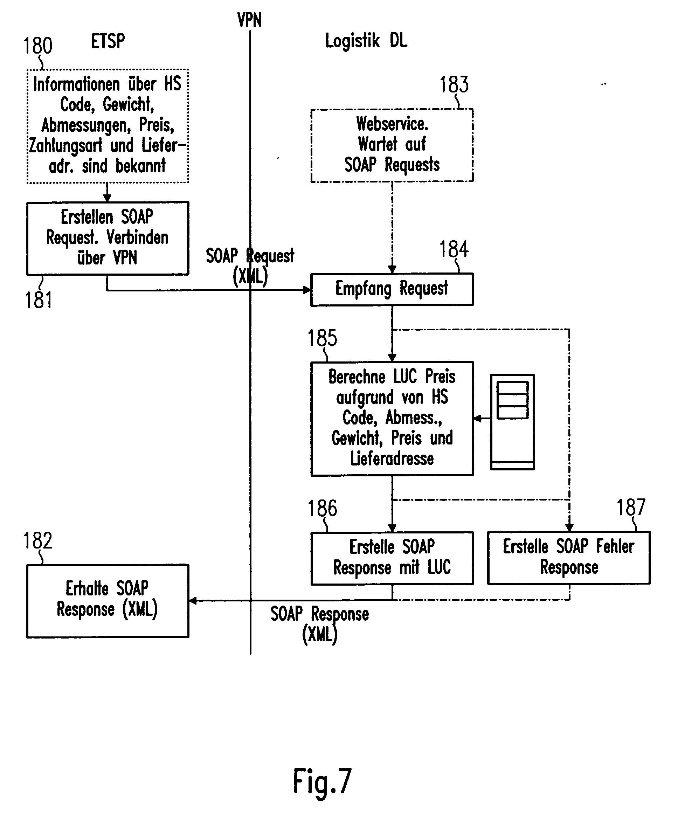

In Fig. 7 ist ein Ablaufdiagramm in den Verfahrensschritten 180 bis 187 dargestellt, welches den Prozess zur Berechnung der Landed Unit Costs (LUC) verdeutlicht. Dabei sind die Harmonized System Codes (HS Code), die Abmessungen, Gewichte und Bruttopreise der Waren im Warenkorb dem System bereits bekannt. Diese Daten werden im XML-Format mittels SOAP-Anfrage beispielsweise über die VPN-Datenleitung 4 gemäß Fig. 1 an das Datenverarbeitungssystem 1B des Logistikdienstleisters übermittelt. Dort empfängt der Listener des Logistik-Webservices die Nachricht und errichtet nun unter Zuhilfenahme seiner Datenbank die LUC. Tritt dabei oder bereits beim Empfang der Anfrage ein Fehler auf, wird eine SOAP-Antwort mit Fehlermeldung an ETSP gesandt. Wenn alles korrekt läuft, erhält ETSP eine SOAP-Antwort mit dem berechneten LUC, sowie den im Einzelnen aufgeschlüsselten Kosten (Steuer, Transport, Zoll usw.).

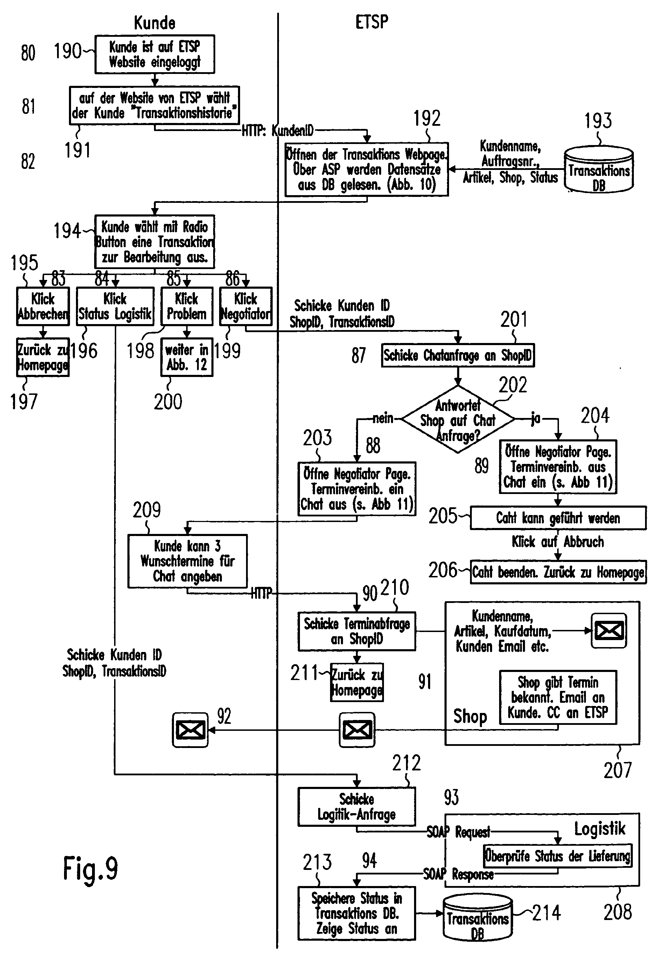

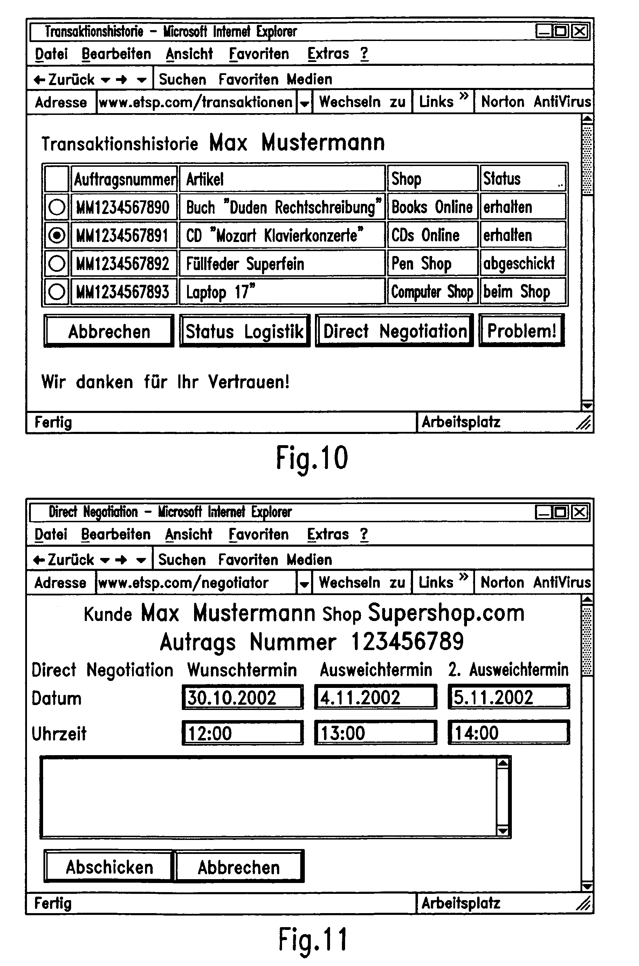

Fig. 9 zeigt den Ablauf bei Abruf der Transaktionshistorie in den Stufen 80 bis 94 bzw. den Schritten 190 bis 214. Hinsichtlich des genauen Verfahrensablaufes wird hiermit explizit auf die Darstellung in Fig. 9 verwiesen. Ergänzend ist auszuführen, dass der Kunde auf der Website von ETSP eingeloggt sein muss, und den Button für Transaktionen klicken muss (Ebene 80, 81 und Schritte 190, 191). Es öffnet sich eine Webpage, die den Inhalt dynamisch zum Beispiel via ASP aus den Kundendaten und der Transaktions-Datenbank zusammensetzt (Ebene 82, Schritte 192, 193). Ergänzend ist hierzu auf Fig. 10 zu verweisen, das ein Beispiel für eine derartige Webpage zeigt.

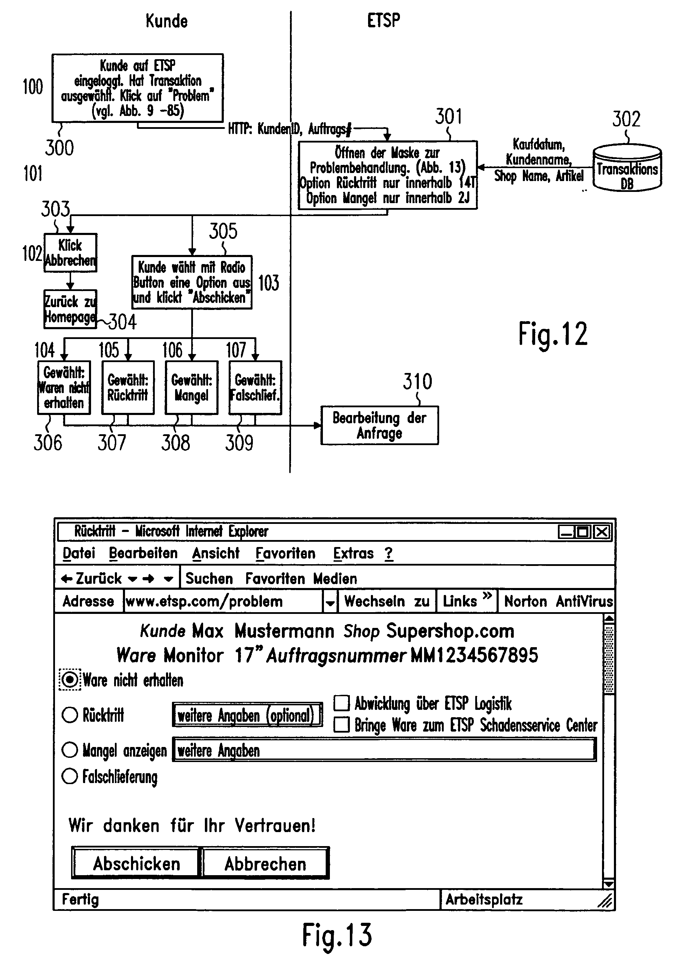

Zu jedem Artikel, den der Kunde bestellt oder gekauft hat, kann er die Auftragsnummer, die Artikelbezeichnung, den Shop und den Status abrufen. Mit der jeweiligen Checkbox kann er eine Transaktion auswählen. Er hat nur die Möglichkeiten, den Vorgang abzubrechen, den Status der Logistik abzurufen (siehe Abfrage Logistikstatus), die so genannte Direct Negotiation zu initiieren (Schritt 199) oder ein Problem zu melden (vgl. hierzu Fig. 12).

In Bereich 86 und Schritt 199 findet sich der Vorgang "Direct Negotiation". Dem System von ETSP sind in diesem Schritt die Kundenidentifikation, Transaktionsidentifikation und die Shopidentifikation bekannt. Es wird versucht, eine Online-Verbindung mit dem Shop zu öffnen und einen Chat zu starten. Gelingt dies nicht, öffnet sich eine Maske (vgl. hierzu Fig. 11), mit der der Kunde einen Terminvorschlag für einen Chat geben kann (Schritt 203). Andernfalls können Kunde und Shop miteinander chatten, um ein Problem zu besprechen (Schritte 204 bis 206).

Bei der Terminvereinbarung kann der Kunde beispielsweise drei Wunschtermine nennen, welche er im Webformular einträgt. Die Daten werden an ETSP gesendet, und dann in einer E-Mail an den Shop.

Der Shop kann sich nun für einen Termin entscheiden und sendet eine entsprechende E-Mail an den Kunden und in CC an ETSP. Zum angegebenen Zeitpunkt sollte der Kunde erneut die Direct Negotiation zu starten versuchen.

Um den Status einer Bestellung beim Logistikunternehmen nachzufragen (Track and Trace), wird die Auftragsnummer mittels SOAP-Anfrage an den Logistiker übermittelt. Dieser überprüft den Status der Bestellung und sendet eine SOAP-Antwort. Der Status wird in der Transaktions-Datenbank von ETSP gespeichert und dem Kunden angezeigt (Schritte 208, 212, 213 und 214).

In den Fig. 10 und 11 sind Abbildungen von Masken für die Transaktionshistorie im Web und die Funktion "Direct Negotiation" dargestellt, so dass zur Offenbarung hiermit ausdrücklich auf diese Figuren verwiesen wird.

In Fig. 12 ist in den Schritten 300 bis 310 ein Ablaufdiagramm für den Prozess zur Behandlung eines Problems dargestellt, wobei zur Offenbarung hiermit ausdrücklich auf diese Figur verwiesen wird.

Hat ein Kunde ein Problem mit einer über ETSP gekauften oder bestellten Ware, muss er dieses Problem über die Website von ETSP melden. Er muss sich hierzu einloggen und in der Transaktionshistorie die entsprechende Transaktion wählen und auf "Problem" klicken (vgl. hierzu in Fig. 9 Schritt 198 und in Fig. 12 Schritt 300). Es öffnet sich die Maske gemäß Fig. 13 (Schritt 301). Neben Kundenname, Shopname, Auftragsnummer und Ware erscheint ein Menü, in dem der Kunde die Art des Problems angeben kann. Der Vorgang kann natürlich jederzeit abgebrochen werden (Schritt 303).

Die Option "Rücktritt" steht dem Kunden nur innerhalb von 14 Tagen nach Erhalt der Ware zur Verfügung. Dasselbe gilt für den Mangel innerhalb von zwei Jahren nach Erhalt.

Bei Nicht-Erhalt der Ware (Schritt 306) oder Falschlieferung (Schritt 309) müssen keine weiteren Angaben gemacht werden. ETSP meldet das Problem mittels Webservice an den Logistikdienstleister.

Bei Rücktritt hat der Kunde die Option, weitere Angaben zu tätigen, und er kann sich entscheiden, ob er die Ware über den ETSP-Logistikdienstleister oder einen anderen Logistiker an den Shop des Verkäufers zurücksendet. Im ersten Fall kann er zusätzlich wählen, ob er die Ware selbst zum nächsten ETSP-Schadensservicecenter bringt. Wenn die Ware mangelhaft ist, müssen weitere Angaben gemacht werden (Schritt 308). In beiden Fällen werden die Anfragen von ETSP bearbeitet.

## Patentansprüche

1. EDV-System (1) zur Abwicklung von Handelsgeschäften über Datenleitungen, insbesondere Internet-Handelsgeschäfte,
- mit zumindestens einem Verkäufer-Datenterminal (2);
- mit zumindestens einem Käufer-Datenterminal (3); und
- mit einer ersten Datenleitung (D1, D_{D}, D2), über die das Verkäufer-Datenterminal (2) und das Käufer-Datenterminal (3) für einen ersten Datenaustausch zur Initiierung des Handelsgeschäftes direkt, insbesondere über das Internet (I), verbindbar sind, **gekennzeichnet,**
- **durch** eine Treuhand-Datenverarbeitungsanlage (1A), die wahlweise mit Hilfe eines auf dem Verkäufer-Datenterminal (2) vorgesehenen Zusatztools über eine zweite Datenleitung (D1, D_{T1}, D3) mit dem Käufer-Datenterminal (3) und eine dritte Datenleitung (D2, D_{T2}, D3) mit dem Verkäufer-Datenterminal (2) für den weiteren Datenaustausch zur Vollendung des Handelsgeschäftes zwischen Verkäufer-Datenterminal (2) und Käufer-Datenterminal (3) zwischenschaltbar ist.

2. EDV-System nach Anspruch 1, **dadurch gekennzeichnet, dass** die Treuhand-Datenverarbeitungsanlage (1A) mit einem Datenverarbeitungssystem (1B) eines Logistikunternehmens koppelbar ist.

3. EDV-System nach Anspruch 2, **dadurch gekennzeichnet, dass** die Treuhand-Datenverarbeitungsanlage (1A) mit dem Datenverarbeitungssystem (1B) des Logistikunternehmens über ein privates elektronisches Netzwerk (4, 7, 7') koppelbar ist.

4. EDV-System nach Anspruch 3, **dadurch gekennzeichnet, dass** das private Netzwerk ein VPN-Gateway (7) auf Seiten der Treuhand-Datenverarbeitungsanlage (1A) aufweist, das über eine Datenleitung (4) und eine Firewall (7') mit einer EDV-Anlage (7'') des Logistikunternehmens koppelbar ist.

5. EDV-System nach einem der Ansprüche 1 bis 4, **dadurch gekennzeichnet, dass** die Treuhand-Datenverarbeitungsanlage (1A) ein internes EDV-Netzwerk (5) aufweist, das über eine Zugriffsbeschränkungsvorrichtung (6) mit einem externen Datennetz, insbesondere dem Internet (I), koppelbar ist.

6. EDV-System nach Anspruch 5, **dadurch gekennzeichnet, dass** die Zugriffsbeschränkungsvorrichtung (6) über eine Firewall (9) und das VPN-Gateway (7) sowie optional einen Router (8) mit einem Internetserviceprovider (ISP) verbindbar ist.

7. EDV-System nach Anspruch 5 oder 6, **dadurch gekennzeichnet, dass** die Zugriffsbeschränkungsvorrichtung (6) ferner über eine interne Firewall (10) mit dem internen Netzwerk (5) verbunden ist.

8. EDV-System nach einem der Ansprüche 5 bis 7, **dadurch gekennzeichnet, dass** die Zugriffsbeschränkungsvorrichtung (6) eine Mehrzahl von Webservern (11) aufweist.

9. EDV-System nach Anspruch 8, **dadurch gekennzeichnet, dass** die Webserver (11) über die interne Firewall (10) mit einem internen Netzwerkserver (20), der Teil des internen Netzwerkes (5) ist, koppelbar sind.

10. EDV-Sytem nach einem der Ansprüche 5 bis 9, **dadurch gekennzeichnet, dass** das interne Netzwerk (5) ferner einen Datenbankserver (21) und optional ein Callcenter (23), ein CRM-Modul (25) sowie einen Authentizitätsserver (24) aufweist.

11. Treuhand-Datenverarbeitungsanlage (1A) für ein EDV-System (1) gemäß dem Oberbegriff des Anspruches 1, **gekennzeichnet durch** wenigstens eines der Merkmale der Ansprüche 1 bis 10.

12. Verfahren zur Abwicklung von Handelsgeschäften über Datenleitungen, insbesondere Internet-Handelsgeschäfte, mit folgenden Verfahrensschritten:
- Aufbau einer direkten Datenverbindung zwischen einem Käufer-Datenterminal (3) und einem Verkäufer-Datenterminal (2) zur Initiierung eines Handelsgeschäftes durch Füllen eines Warenkorbes;
- Anzeigen einer Treuhandoption (ETSP-Button) auf der Website des Verkäufer-Datenterminals (2);
- Aufbau einer Datenverbindung zwischen dem Käufer-Datenterminal (3) und einer Treuhand-Datenverarbeitungsanlage (1A) durch käuferseitige Betätigung der Treuhandoption (Schritt 132);
- Aufbau einer Datenverbindung zwischen der Treuhand-Datenverarbeitungsanlage (1A) und dem Verkäufer-Datenterminal (2) zur Weiterleitung von Daten zur Identifikation des Käufers, Speicherung des Käufers (UID) und zum Inhalt des Warenkorbes (Schritt 133B);
- automatische Überprüfung der Käuferdaten durch die Treuhand-Datenverarbeitungsanlage (1A) und Information an das Verkäufer-Datenterminal (2), falls Kaufdaten richtig sind;
- automatisches verkäuferseitiges Abrufen des Warenkorbs aus der Datenbank des Verkäufer-Datenterminals (2) und Ermitteln von Versanddaten sowie Übersenden der Versanddaten an die Treuhand-Datenverarbeitungsanlage (1A);
- elektronisches Übersenden der Warenkorb- und Versanddaten sowie von Daten über Lieferadresse und Zahlungsart über eine privilegierte Datenleitung (4) an das Datenverarbeitungssystem (1B) eines Logistikunternehmens;
- automatische Ermittlung des endgültigen Gesamtpreises (LUC) für den Käufer durch das Logistikunternehmen und Übersendung der entsprechenden Daten an die Treuhand-Datenverarbeitungsanlage (1A) und Darstellung des Ergebnisses auf einer Toolbar (Fig. 4) für den Käufer;
- Bestätigung des Kaufangebotes durch käuferseitige Betätigung eines Kauf-Buttons am Käufer-Datenterminal (3) und Übersendung dieser Daten an die Treuhand-Datenverarbeitungsanlage (1A);
- Weiterleitung einer "Kauf OK"-Meldung von der Treuhand-Datenverarbeitungsanlage (1A) an das Verkäufer-Datenterminal (2);
- Abwickeln des Handelsgeschäftes durch den Verkäufer; und
- automatische Bestätigung der Geschäftsabwicklung vom Verkäufer-Datenterminal (2) an die Treuhand-Datenverarbeitungsanlage (1A).
